# EUROPÄISCHE PATENTSCHRIFT

(11) **EP 2 112 491 B1**
(45) Veröffentlichungstag und Bekanntmachung des Hinweises auf die Patenterteilung: **05.11.2014**
(21) Anmeldenummer: 08008083.1
(22) Anmeldetag: 26.04.2008
(51) Int. Cl.: G01M 3/16, F17D 5/06, G01M 3/18

(54) **Vorrichtung, System und Verfahren zur Detektion und Ortung von Undichtigkeiten**
Device, system and method for detecting and locating leakages
Dispositif, système et procédé de détection et de localisation d'étanchéïtés

(43) Veröffentlichungstag der Anmeldung: 28.10.2009
(73) Patentinhaber: JR-ISOTRONIC GmbH, 67373 Dudenhofen (DE)
(72) Erfinder: Römer, Martin, 76863 Herxheimweyher (DE)
(74) Vertreter: Wagner, Jutta

(56) Entgegenhaltungen:
- EP-A- 0 045 888
- WO-A-96/18874
- DE-A1- 3 045 257
- DE-A1- 4 124 640
- DE-A1- 19 519 650
- DE-A1- 19 805 263
- US-A1- 2002 033 759
- US-A1- 2002 196 008
- US-A1- 2004 098 212
- US-A1- 2007 063 833

## Beschreibung

Die Erfindung betrifft eine Vorrichtung zur Detektion und Ortung von Undichtigkeiten bei Aufbewahrungs- oder Leitungsvorrichtungen für Fluide, die eine innere, das Fluid zurückhaltende oder leitende Einrichtung und eine äußere, die innere Einrichtung wenigstens teilweise umfassende Einrichtung aufweist, wobei beide Einrichtungen einen mit Füllmaterial zur Wärmedämmung gefüllten Zwischenraum umschließen, und wobei die Vorrichtung in das Füllmaterial eingebrachte Sensorleitungen umfasst, gemäß dem Oberbegriff des Anspruchs 1.

Die Erfindung betrifft außerdem ein System zur Detektion und Ortung von Undichtigkeiten bei Aufbewahrungs- oder Leitungsvorrichtungen für Fluide, die eine innere, das Fluid zurückhaltende oder leitende Einrichtung und eine äußere, die innere Einrichtung wenigstens teilweise umfassende Einrichtung aufweist, wobei beide Einrichtungen einen mit Füllmaterial zur Wärmedämmung gefüllten Zwischenraum umschließen, und wobei die Vorrichtung in das Füllmaterial eingebrachte Sensorleitungen umfasst, gemäß dem Oberbegriff des Anspruchs 7, sowie ein Verfahren zur Detektion und Ortung von Undichtigkeiten bei Aufbewahrungs- oder Leitungsvorrichtungen für Fluide, die eine innere, das Fluid zurückhaltende oder leitende Einrichtung und eine äußere, die innere Einrichtung wenigstens teilweise umfassende Einrichtung aufweist, wobei beide Einrichtungen einen mit Füllmaterial zur Wärmedämmung gefüllten Zwischenraum umschließen, und wobei die Vorrichtung in das Füllmaterial eingebrachte Sensorleitungen umfasst, gemäß dem Oberbegriff des Anspruchs 12.

Schließlich betrifft die Erfindung ein Computerprogramm mit Programmcode zur Durchführung der Verfahrensschritte des erfindungsgemäßen Verfahrens, wenn das Programm in einem Computer ausgeführt wird, gemäß Anspruch 15.

Schließlich betrifft die Erfindung ein Rohrleitungssystem mit wenigstens einer Rohrleitung, die ein Innenrohr, ein Außenrohr und Füllmaterial zur Wärmedämmung im Raum zwischen dem Innenrohr und dem Außenrohr sowie Sensorleitungen im Füllmaterial aufweist, und mit einem erfindungsgemäßen System zur Detektion und Ortung von Undichtigkeiten, gemäß Anspruch 16.

Ein Beispiel für eine Aufbewahrungs- oder Leitungsvorrichtungen für Fluide, die mit einer gattungsgemäßen Vorrichtung auf Undichtigkeiten überwacht werden soll, ist ein Stahlmantel- oder Kunststoffmantelrohrsystem, wie es für die meisten in der Fernwärme- und Kälteversorgung üblichen Medien, Temperaturen und Rohrdimensionen eingesetzt wird. Solche Rohrleitungen umfassen meistens ein das Medium führendes Innenrohr, ein das Innenrohr mit Abstand umgebendes Außenrohr sowie Füllmaterial im Raum zwischen den beiden Rohren zur Wärmedämmung. Das Füllmaterial besteht beispielsweise aus Polyurethanschaum. Die Rohrleitungen sind oft unterirdisch in einer Tiefe von einigen Metern im Erdboden vergraben.

Undichte Stellen im Rohrleitungssystem sollen rechtzeitig erkannt und zur Verringerung des Grabungsaufwandes möglichst genau lokalisiert werden können. Zur Detektion und Ortung von undichten Stellen am Innenrohr ist es bekannt, Sensorelemente direkt in den Zwischenraum zwischen dem Innenrohr und dem Außenrohr, also in die Wärmedämmung, einzubringen. Solche Sensoren enthalten im Wesentlichen elektrische Leiter. Bei einer Undichtigkeit des Innenrohres dringt Flüssigkeit in den Zwischenraum ein. Die dadurch verursachte Feuchtigkeit wird durch den Sensor ermittelt. Durch elektrische Messung der Impedanz oder der erhöhten elektrischen Leitfähigkeit des normalerweise schlecht leitenden Füllmaterials, welches durch die eintretende Feuchtigkeit in der Umgebung der Undichtigkeit elektrisch leitfähig wird, kann die undichte Stelle detektiert und geortet werden. Die bekannten Messverfahren hierfür bedienen sich meistens zweier elektrischer Leiter in Form von Sensoradern oder Sensordrähten.

Bei einem ersten, als Widerstandsortung bekannten Verfahren, erfolgt die Detektion und Ortung der undichten Stelle, indem mit einer Widerstandsmessbrücke der ohmsche Widerstand zwischen den beiden Sensoradern oder zwischen einer Sensorader und dem leitfähigen Leitungsrohr oder zwischen einer Sensorader und Erde gemessen und nach dem Prinzip des unbelasteten Spannungsteilers die Lage der Fehlerstelle ermittelt wird. Das Verfahren eignet sich für weniger feuchte Fehlerstellen und hat eine Einsatzgrenze in Richtung sehr feuchter Fehlerstellen. In einem alternativen Widerstandsmessverfahren zur Ortung von Kabelschlüssen kann mit einer Wheatstoneschen Brücke der ohmsche Leitungswiderstand zwischen dem Anfang der Sensorader und dem Nebenschluss zwischen den beiden Sensoradern, also dem Ort der Leckage, ermittelt werden. Solche Widerstandsmessverfahren sind im Prinzip bekannt.

Bei einem zweiten, als Laufzeitortung bekannten Verfahren, erfolgt die Detektion und Ortung der undichten Stelle durch die Messung der Laufzeit eines Impulses, der an der niederohmig gewordenen nassen Stelle im Bereich der Undichtigkeit reflektiert wird. Als Sensoren werden bei diesem Verfahren zwei niederohmige, unisolierte Kupferdrähte verwendet. Die Ortung erfolgt dabei zwischen dem Sensordraht und der Rohrleitung. Dieses Verfahren eignet sich besonders für sehr feuchte Fehlerstellen und hat eine Einsatzgrenze hin zu weniger feuchten Fehlerstellen.

Beide Messverfahren werden bisher je nach Anwenderwunsch alternativ eingesetzt. Beide Messverfahren verwenden unisolierte Kupferdrähte als Sensoren. Es können auch isolierte Kupferdrähte verwendet werden, die in regelmäßigen Abständen Isolationsfenster aufweisen, so dass dort die Isolation entfernt ist und der Kupferdraht an dieser Stelle direkt mit dem Füllmaterial in Kontakt steht.

Eine Variante ist dadurch gegeben, dass an bestimmten Stellen zwischen den Sensordrähten feuchteempfindliche Schalter vorgesehen sind, die ihre Leitfähigkeit durch die Einwirkung von Feuchte ändern. Als feuchteempfindliche Schalter können beispielsweise je zwei gegenüberliegende und einen Abstand zwischen sich aufweisende Kupferplättchen verwendet werden, die zwischen sich einen feuchteempfindlichen Füllstoff, beispielsweise ein feuchteempfindliches Vlies, aufweisen. Tritt in der Umgebung eines solchen feuchteempfindlichen Schalters Feuchtigkeit aus, so dringt diese in das Vlies des der Fehlerstelle nächstgelegenen Schalters ein und erzeugt an dieser Stelle aufgrund der hohen Leitfähigkeit des feuchten Vlieses einen Kurzschluss zwischen den Sensoradern. Das Auftreten und die Lage dieses Kurzschlusses kann entweder nach dem Verfahren der Widerstandsortung oder nach dem Laufzeitverfahren bestimmt werden.

In der DE 195 19 650 C2 ist ein Rohrleitungssystem und ein Verfahren zur Detektion und Ortung von Undichtigkeiten in diesem Rohrleitungssystem beschrieben, bei dem an bekannten Orten simulierte Fehlerstellen in Form von Schaltern, welche an dem Ort der simulierten Fehlerstelle bei Betätigung des Schalters einen Kurzschluss zwischen der Sensorleitung und dem Rohr erzeugen, eingebaut sind. Zum Überprüfen der Messgenauigkeit wird von Zeit zu Zeit ein Kurzschluss simuliert und der Messwert für den Ort des simulierten Kurzschlusses wird mit dem bekannten Ort des Schalters verglichen. Aus dem Vergleich wird ein Korrekturwert für die Ortung ermittelt, der bis zum nächsten Abgleich den Ortungsmessungen zugrunde gelegt wird.

Aus verschiedenen Schriften sind bereits Drähte/Sensoren bekannt, die sich für beide Messverfahren eignen.

DE 41 24 640 zeigt ein Rohrleitungssystem mit Sensordrähten, die für mehrere Messverfahren geeignet sind, aber kein Messgerät, mit dem beide Messverfahren durchgeführt werden können.

WO 96/18874 zeigt eine besondere Ausgestaltung von Sensordrähten in einem Rohrleitungssystem. Mit diesen Sensordrähten kann sowohl das Widerstands- als auch das Laufzeitverfahren angewendet werden. Es wird nichts darüber ausgesagt, wie, also mit welchem Messmodul, denn gleichzeitig die beiden Messverfahren an der einen Rohrleitung durchgeführt werden können.

DE 30 45 888 zeigt ebenfalls nur eine Elektrodenkonfiguration, kein Messmodul.

EP 045 888 zeigt eine Sensoranordnung zur Dampfdetektion.

Wenn auch sowohl für die Laufzeitortung als auch für die Widerstandsortung dieselben Sensordrähte in dem Rohrleitungssystem verwendet werden können, so erfordert doch nach dem Stand der Technik jedes Messverfahren ein eigenes, speziell auf das Messverfahren abgestimmtes Messgerät. Jedes Messgerät kann über Kabel mit einer Zentrale verbunden sein, oder es ist vor Ort am Ort des Wärmeverbrauchers oder des Wärmeerzeugers installiert, muss also vor Ort abgelesen werden.

Es ist daher die Aufgabe der vorliegenden Erfindung, eine gattungsgemäße Vorrichtung und ein gattungsgemäßes System zur Detektion und Ortung von Undichtigkeiten weiter zu verbessern.

Die Aufgabe wird bezüglich der Vorrichtung zur Detektion und Ortung von Undichtigkeiten gelöst durch die kennzeichnenden Merkmale des Anspruchs 1, und bezüglich des Systems zur Detektion und Ortung von Undichtigkeiten durch die kennzeichnenden Merkmale des Anspruchs 7.

Erfindungsgemäß umfasst also eine Vorrichtung zur Detektion und Ortung von Undichtigkeiten eine Messvorrichtung, welche a) eine Anschlussvorrichtung zum Anschluss der Sensorleitungen, b) wenigstens zwei Messmodule, wobei jedes der Messmodule für die Ortung und Detektion von Undichtigkeiten nach einem anderen Messverfahren eingerichtet ist, c) ein Konfigurationsmodul, welches zur Auswahl und Konfiguration der Messmodule eingerichtet ist, d) ein Kommunikationsmodul, welches für die drahtlose Kommunikation der Messeinrichtung mit einer entfernt liegenden Überwachungseinrichtung eingerichtet ist, umfasst, so dass die Auswahl des jeweils zu verwendenden Messverfahrens und die Konfiguration des zugehörigen Messmoduls von der entfernt liegenden Überwachungsstation aus, mittels drahtloser Kommunikation erfolgen kann. Der Vorteil der Erfindung liegt darin, dass nur noch ein einziges Gerät benötigt wird, mit dem eine Reihe von möglichen Messverfahren zur Detektion und Ortung von Undichtigkeiten durchgeführt werden kann.

Beispielsweise können auch verschiedene Messverfahren mit demselben Sensoraderpaar in dem Rohrleitungssystem durchgeführt werden. Die Messungen können dabei abwechselnd nach unterschiedlichen Messverfahren durchgeführt werden, und die Ergebnisse der Ortung, die nach unterschiedlichen Verfahren erzielt werden, können dann verglichen werden. Aus Abweichungen kann ein Indikatorwert oder ein Korrekturwert ermittelt werden, ohne dass zusätzliche Vorrichtungen, wie die Schalter gemäß der DE195 19 650 C2, erforderlich sind. Außerdem können sich die unterschiedlichen Messverfahren gegenseitig überwachen, wodurch eine Erhöhung der Verlässlichkeit erfolgt.

Ein weiterer Vorteil der Erfindung liegt darin, dass die erfindungsgemäße Vorrichtung drahtlos aus der Ferne überwacht, konfiguriert und die Messwerte drahtlos an eine entfernt liegende Überwachungsstation übermittelt werden können. Es entfällt der Verkabelungsaufwand, und eine Begehung des Messortes ist nicht mehr nötig, um eine Fehlermeldung zu bemerken. Die Konfigurierung umfasst beispielsweise die Auswahl der Messmethode und damit des Messmoduls, die Vorgabe einer bestimmten Alarmverzögerung und die Vorgabe einer bestimmten Alarmschwelle, beispielsweise für den Isolationswiderstand, bei deren Unterschreiten ein Alarm ausgelöst und von der Vorrichtung zu der Überwachungsstation übertragen werden soll.

Gemäß einer vorteilhaften Ausführungsform der Erfindung ist ein erstes Messmodul für die Ortung und Detektion von Undichtigkeiten nach dem Verfahren der Widerstandsortung eingerichtet. Ein zweites Messmodul kann dann für die Ortung und Detektion von Undichtigkeiten nach dem Verfahren der Laufzeitortung eingerichtet sein.

Gemäß einer sehr vorteilhaften weiteren Ausführungsform ist ein drittes Messmodul für die für die Ortung und Detektion einer Leitungsunterbrechung der Sensoradern nach dem Kapazitätsmessverfahren eingerichtet. Dabei ist das Messmodul dazu eingerichtet, um die Kapazitätsänderung einer Sensorader zu dem medienführenden Innenrohr zu erfassen. Die Sensorader ist in das Füllmaterial fest eingegossen und befindet sich daher über ihre ganze Länge in gleichem Abstand zu dem Innenrohr. Somit besteht bei ungestörter Sensorader immer dieselbe Kapazität pro Längeneinheit. Wenn an einer Stelle die Sensorader unterbrochen ist, ändert sich die Kapazität der Sensorader zu dem Innenrohr. Die Änderung der Kapazität ist dabei proportional zu der Änderung der Länge der ungestörten Ader. Daher kann aus der Änderung der Kapazität die Lage der Unterbrechungsstelle, ermittelt werden.

Gemäß einer weiteren vorteilhaften Ausführungsform ist das Kommunikationsmodul für die drahtlose Kommunikation nach einem Mobilfunk-Standard eingerichtet. Vorteilhafterweise kommt hier der weit verbreitete GSM-Standard in Frage. Die erfindungsgemäße Vorrichtung kann dabei eine SIM-Karte eines kommerziellen Mobilfunkbetreibers umfassen, insbesondere eine sogenannte Pre-Paid Karte, auf der ein vorherbezahltes Guthaben für eine gewisse Anzahl und Dauer von Mobilfunkverbindungen gespeichert ist. In der entfernt liegenden Überwachungsstation ist ebenfalls eine Mobilfunk-Karte enthalten. Um eine Kommunikationsverbindung zwischen einer erfindungsgemäßen Vorrichtung und der Überwachungsstation herzustellen, wählt die Überwachungsstation beispielsweise die Rufnummer der erfindungsgemäßen Vorrichtung, welche die Verbindung annimmt, und dann wird der Daten- bzw. Anweisungsaustausch zwischen der erfindungsgemäßen Vorrichtung und der Überwachungsstation in Formeiner Datenübertragung über die Mobilfunkverbindung durchgeführt. Im Falle eines Alarmes kann auch die erfindungsgemäße Vorrichtung über die Mobilfunkkarte die Überwachungsstation anwählen und eine Mobilfunkverbindung zum Zwecke des Datenaustausches zwischen der Vorrichtung und der Überwachungsstation herstellen.

Eine weitere vorteilhafte Ausgestaltung der Erfindung ist dadurch gekennzeichnet, dass die Messmodule dazu eingerichtet sind, um bei Detektion einer Undichtigkeit oder eines Sensoraderbruches erst nach Ablauf einer vorgebbaren Alarmverzögerungszeit eine Alarmmeldung über das Anzeige- und Verarbeitungsmodul und/oder das Kommunikationsmodul an die Überwachungsstation zu senden. Die Alarmverzögerungszeit entspricht derjenigen, die bei der Konfiguration, siehe oben, der Vorrichtung mitgeteilt wurde. Der Sinn der Alarmverzögerung besteht darin, eine Häufung von Fehlalarmen zu vermeiden, die durch kurzzeitig auftretende Schwankungen der elektrischen Eigenschaften der Sensoradern, beispielsweise bedingt durch Alterung, Medieneinfluss oder Temperaturschwankung, verursacht werden.

Ein erfindungsgemäßes System zur Detektion und Ortung von Undichtigkeiten bei Aufbewahrungs- oder Leitungsvorrichtungen für Fluide, die eine innere, das Fluid zurückhaltende oder leitende Einrichtung und eine äußere, die innere Einrichtung wenigstens teilweise umfassende Einrichtung aufweist, wobei beide Einrichtungen einen mit Füllmaterial zur Wärmedämmung gefüllten Zwischenraum umschließen, und wobei die Vorrichtung in das Füllmaterial eingebrachte Sensorleitungen umfasst, ist gekennzeichnet durch a) wenigstens eine zu überwachende Aufbewahrungs- oder Leitungsvorrichtung für Fluide, b) wenigstens eine erfindungsgemäße Vorrichtung zur Detektion und Ortung von Undichtigkeiten und c) einen Server-Computer mit einem Server-Kommunikationsmodul, der als entfernt liegende Überwachungseinrichtung für die wenigstens eine Vorrichtung eingerichtet ist.

Gemäß einer besonders vorteilhaften Weiterbildung der Erfindung verfügt jeder zu überwachende Abschnitt der Aufbewahrungs- oder Leitungsvorrichtung über eine diesem Abschnitt zugeordnete erfindungsgemäße Vorrichtung zur Detektion und Überwachung, wobei der Server für jede der Vorrichtungen einen dieser Vorrichtung zugeordneten Daten- und Bedienbereich umfasst. Der Vorteil eines erfindungsgemäßen Systems besteht darin, dass von einem einzigen Server aus eine Vielzahl von Messstellen überwacht und konfiguriert werden kann. Die Messdaten und Messverläufe werden auf dem Server abgelegt. Ein Benutzer oder Bediener kann von einem weiteren entfernt liegenden Kunden-Computer aus ebenfalls auf den Server-Computer zugreifen und sich von dem Server die Daten, die zu seinen Leitungsabschnitten gehören, herunterholen, ansehen, abspeichern etc., und Konfigurationsdaten zu dem Server übertragen, der diese dann wiederum an die erfindungsgemäßen Vorrichtungen weitergibt.

Daher ist insbesondere vorteilhaft eine Ausführungsform der Erfindung, bei der der jeder Vorrichtung zugeordnete Daten- und Bedienbereich auf dem Server-Computer dazu eingerichtet ist, um Daten über den aktuellen Zustand des überwachten Abschnittes anzuzeigen, zu speichern und für eine Fernabfrage von einem entfernt liegenden Kunden-Computer aus zur Verfügung zu stellen. Dabei können vorteilhafterweise von einem entfernt liegenden Kunden-Computer aus Daten von denjenigen Daten- und Bedienbereichen auf dem Server-Computer, die dem Kunden zugeordnet sind, abfragbar sind und Daten und/oder Anweisungen von einem entfernt liegenden Kunden-Computer aus in diejenigen Daten- und Bedienbereichen auf dem Server-Computer, die dem Kunden zugeordnet sind, übertragbar sind.

Ein erfindungsgemäßes System bietet die technische Vorraussetzung für eine Service-Dienstleistung der Rohrüberwachung. Ein Diensfileister installiert an verschiedenen Rohrleitungen erfindungsgemäße Vorrichtungen zur Detektion und Ortung von Undichtigkeiten, sowie den Server. Er betreibt den Server und stellt jedem Kunden einen Zugang zu demjenigen Speicherbereich auf dem Server zur Verfügung, der die Daten von den Überwachungspunkten an dem Rohrleitungssystem des Kunden beinhaltet. Die Daten anderer Überwachungspunkte, die den Rohrleitungen anderer Kunden zugeordnet sind, kann dieser Kunde nicht einsehen. Nur der Dienstleister hat Zugang zu allen Daten.

Eine weitere vorteilhafte Ausführungsform ist dadurch gekennzeichnet, dass die Vorrichtungen zur drahtlosen Kommunikation mit dem Kunden-Computer eingerichtet sind, um Daten von den Vorrichtungen abzufragen und/oder Daten und/oder Anweisungen zu den Vorrichtungen zu übertragen. Dadurch können die Kunden alternativ zu dem Zugang über den zentralen Server-Computer auch direkt von ihren Kundenrechnern aus auf jede einzelne ihrer Ortungsvorrichtungen zugreifen.

Ein erfindungsgemäßes Verfahren zur Detektion und Ortung von Undichtigkeiten bei Aufbewahrungs- oder Leitungsvorrichtungen für Fluide, die eine innere, das Fluid zurückhaltende oder leitende Einrichtung und eine äußere, die innere Einrichtung wenigstens teilweise umfassende Einrichtung aufweist, wobei beide Einrichtungen einen mit Füllmaterial zur Wärmedämmung gefüllten Zwischenraum umschließen, und wobei die Vorrichtung in das Füllmaterial eingebrachte Sensorleitungen umfasst, mit einem System gemäß einem der Ansprüche 7 bis 11, ist gekennzeichnet durch die Verfahrensschritte a) Auswahl und Konfiguration eines Messmoduls und damit eines durch das ausgewählte Messmodul durchzuführenden Messverfahrens, b) Feststellen, ob durch das ausgewählte Messmodul aufgrund des ausgewählten Messverfahrens ein Indikatorwert für eine Undichtigkeit oder einen Bruch der Sensoradern ermittelt wurde, c) Anzeigen einer Fehlermeldung und Anzeigen des von dem Messmodul ermittelten Fehlerortes, wenn ein entsprechender Indikatorwert festgestellt wurde, d) Übertragen der Fehlermeldung und des Fehlerortes an den Server-Computer.

Gemäß einer vorteilhaften Weiterbildung des erfindungsgemäßen Verfahrens erfolgt die Auswahl und Konfiguration eines Messmoduls von dem Server-Computer aus, und bei der Konfiguration wird ein Wert für eine Alarmverzögerung von dem Server-Computer an die Mess-Vorrichtung übertragen.

Gemäß einer weiteren vorteilhaften Ausgestaltungsform der Erfindung wird bei Erkennen eines Indikatorwertes für eine Undichtigkeit oder einen Bruch der Sensoradern eine redundante Messung mit einem anderen Messmodul der Messvorrichtung zur Überprüfung der ersten Messung durchgeführt. Ein solcher Indikatorwert kann beispielsweise das Unterschreiten eines bestimmten Isolationswiderstandes, einer bestimmten Laufzeit oder einer bestimmten Kapazität sein.

Da sowohl auf dem Server-Computer als auch auf den Kunden-Computern Programme installiert sind und laufen, die das erfindungsgemäße Verfahren mithilfe der genannten Computer durchführen, umfasst die vorliegende Erfindung auch ein Computerprogramm mit Programmcode zur Durchführung der oben genannte Verfahrensschritte des erfindungsgemäßen Verfahrens.

Anhand der Zeichnungen, in denen zwei Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Figur 1:: ein schematisches Blockschaltbild einer Ausführungsform einer erfindungsgemäßen Messvorrichtung zur Detektion und Ortung von Undichtigkeiten,
- Figur 2: ein schematisches Blockschaltbild eines erfindungsgemäßen Systems zur Detektion und Ortung von Undichtigkeiten, sowie
- Figur 3: eine alternative Anordnung von Sensorleitungen.

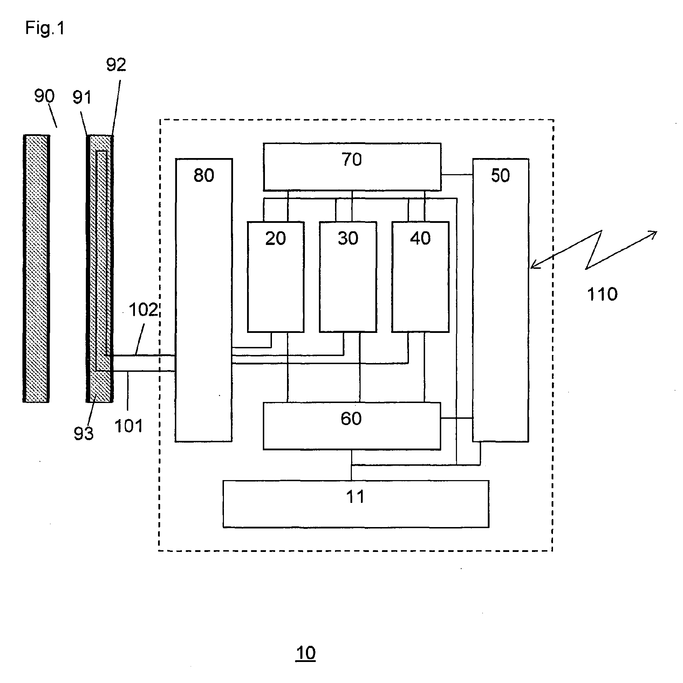

Es werde zunächst Figur 1 betrachtet. Figur 1 zeigt eine Messeinrichtung 10 zur Detektion und Ortung von Undichtigkeiten bei einer Fernwärmeleitungstrasse 90. Die Fernwärmeleitungstrasse 90 ist ein Teilstück einer längeren Fernwärmeleitung. Eine Fernwärmeleitung kann bei einer Gesamtlänge von mehreren Kilometern bis beispielsweise 100 km Leitungslänge aus vielen solcher Trassen bestehen. Eine typische Trassenlänge ist dabei etwa ein Kilometer.

Die Fernwärmeleitung 90 umfasst ein inneres Rohr 91 und ein äußeres Rohr. Das innere Rohr 91 besteht aus Stahl, das äußere Rohr 92 besteht beispielsweise aus Kunststoff. Man spricht dann von einem Kunststoffmantelrohr. In dem Zwischenraum ist als wärmedämmendes Füllmaterial 93 ein Polyurethanschaum eingebracht. In dem Füllmaterial sind zwei parallel zueinander und parallel zu der Rohrwand des Innenrohres 91 verlaufende Sensoradern 101 und 102 eingebracht. Diese werden bei der Herstellung des Rohres 90 in den Zwischenraum mit eingeschäumt, so dass ihre Lage zueinander und ihr Abstand zu der Rohrwand fixiert ist.

Bei den hier verwendeten Sensoradern 101, 102 handelt es sich beispielsweise um blanke Kupferadern. Es könnten aber auch isolierte Kupferadern sein, die an bestimmten Stellen bereichsweise abisoliert sind, so dass die Isolierung dort Fenster aufweist, durch die hindurch der Kupferdraht direkt mit dem Füllmaterial in Verbindung steht. Typischerweise besitzt eine solche Sensorader einen Widerstandswert von etwa 5,7 Ohm pro Meter.

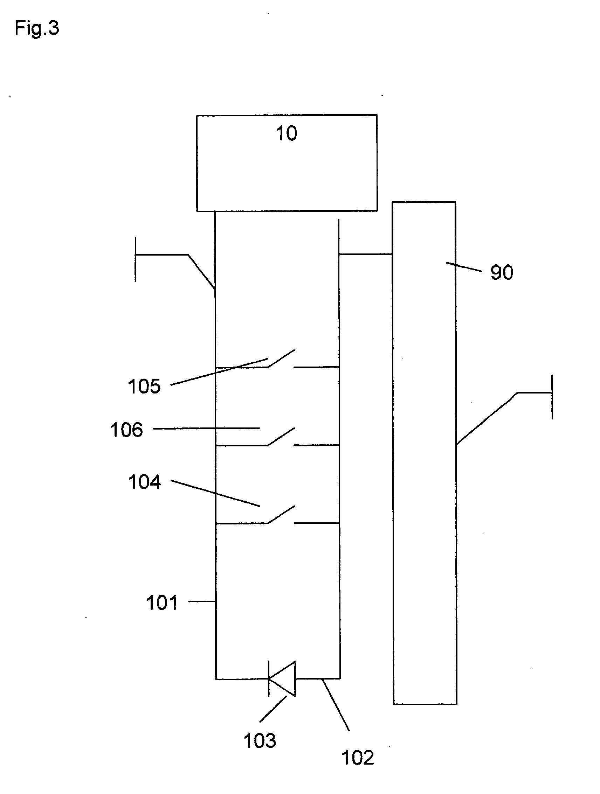

Figur 3 zeigt eine alternative Ausführungsform für die Anordnung der Sensoradern 101, 102. Hierbei sind diese mit einer Diode abgeschlossen. Zwischen den Sensoradern sind an bestimmten Stellen feuchteempfindliche Schalter 104, 105, 106 angebracht. Dies sind beispielsweise parallel zueinander angeordnete Metallplatten, zwischen denen sich ein Vlies befindet, das in trockenem Zustand elektrisch isoliert und in feuchtem Zustand elektrisch leitfähig wird. Wenn nun an den Stellen der Schalter 104, 105, 106 aufgrund einer Undichtigkeit Feuchtigkeit in das Füllmaterial eintritt, so breitet diese sich auch in das Vlies desjenigen Schalters aus, der der Stelle der Undichtigkeit am nächsten liegt. Dieser Schalter wird dann leitfähig. Die effektive Leitungslänge der Sensoradern 101, 102 verkürzt sich entsprechend. Bei Messung des ohmschen Widerstandes der Sensoradern würde man einen entsprechend niedrigeren Widerstandswert messen, aus dessen Betrag der Ort desjenigen Schalters ermittelt werden kann, der kurzgeschlossen hat und in dessen Nähe demzufolge die Undichtigkeit aufgetreten sein muss. Bei Messung der Laufzeit eines Signals entlang der Sensoradern würde diese am Ort des kurzgeschlossenen Schalters reflektiert, und nicht erst an der Diode 103 am Abschluss der Sensoradern 101, 102, so dass die Laufzeit des Signals sich entsprechend verkürzt. Aus der Laufzeitverkürzung kann dann entsprechend die Lage des kurzgeschlossenen Schalters und damit die Lage der Undichtigkeit bestimmt werden.

Die Messeinrichtung 10 hat ein Anschlussmodul 80, an dem die Sensoradern 101, 102 angeschlossen werden. Im einfachsten Fall ist das Anschlussmodul eine Klemmenleiste mit Anschlussklemmen.

Weiterhin hat die Messeinrichtung 10 drei Messmodule 20, 30, 40, die jeweils parallel mit dem Anschlussmodul 80 verbunden sind. Jedes der Messmodule ist eingerichtet, um eine Detektion und Ortung von Undichtigkeiten nach einem bestimmten Messverfahren durchzuführen. Die Messeinrichtung 20 kann nach dem Widerstandsmessverfahren arbeiten, die Messeinrichtung 30 nach dem Laufzeitverfahren und die Messeinrichtung 40 nach dem kapazitiven Verfahren.

Die Messergebnisse der Messmodule werden in einem Verarbeitungs- und Anzeigemodul weiter verarbeitet und angezeigt. Die Verarbeitung kann dabei Funktionen wie Filterung, Glättung, Mittelwertbildung umfassen, aber auch die Ermittlung, ob der jeweils gemessene Wert einer Leckage zuzuordnen ist oder nicht. Wenn beispielsweise nach dem Widerstandsverfahren gemessen wird, Modul 20, und angenommen, die Trassenlänge sei 1000m, dann ergibt sich bei einem angenommenen Widerstandswert der Sensoradern von 5,7 Ohm pro m ein gesamter Widerstand im fehlerfreien Zustand von 2 x 1000 m x 5,7 Ω/m oder 11,4 kΩ. Eine Alarmschwelle kann dann beispielsweise auf 10 kΩ eingestellt werden. Das bedeutet, wenn der gemessene Widerstandswert längere Zeit niedriger als 10kΩ ist, dann interpretiert das das Verarbeitungs- und Anzeigemodul 70 als Leckage und gibt eine entsprechende Warnmeldung ab. Im normalen Betrieb zeigt das Anzeige-Modul 70 beispielsweise den jeweils gemessenen Widerstandswert an. Die Zeit, die abgewartet wird, bis eine Alarmmeldung erzeugt und abgesetzt wird, wird Alarmverzögerung genannt. Sie kann beispielsweise 30s betragen, aber je nach Leitungstyp und Anforderung auch größer gewählt werden. Die Alarmverzögerung wird bei der Konfiguration der Messeinrichtung in diese eingegeben.

Selbstverständlich können Teile der oder sogar die ganze Messwertverarbeitung auch in dem jeweiligen Messmodul 20, 30, 40 mit umfasst sein.

Weitere Anzeigen, die das Anzeige-Modul 70 dem Bediener zur Verfügung stellt, ist beispielsweise die Anzeige, nach welchem Messverfahren gerade gemessen wird, oder der Status der überwachten Trasse, nämlich in Ordnung oder Fehler, weiterhin im Fehlerfall der ermittelte Ort der Leckage, oder auch die Anzeige, in welchem Modus die Messeinrichtung sich gerade befindet, ob im Messmodus, Konfigurationsmodus oder Testmodus beispielsweise.

Weiterhin hat die Messeinrichtung 10 ein Kommunikationsmodul 50. Dieses überträgt die Daten von dem Verarbeitungs- und Anzeigemodul 70 drahtlos zu einer entfernt liegenden Überwachungsstation, angedeutet durch den gezackten Pfeil 110. Hier ist das Kommunikationsmodul ein Datenübertragungsmodul, das wie ein Mobilfunkgerät arbeitet. Es hat eine SIM-Karte eines Mobilfunkbetreibers und kann unter der dieser SIM-Karte zugeordneten Mobilfunknummer angerufen werden, oder es kann von sich aus die Telefonnummer der entfernt liegenden Überwachungsstation wählen, um sich zum Datenaustausch mit dieser zu verbinden.

Weiterhin hat die Messeinrichtung 10 ein Konfigurationsmodul 60. Dieses übernimmt die Konfiguration der Messmodule, der Verarbeitungs- und Anzeigeeinheit und des Kommunikationsmoduls. Auch das Konfigurationsmodul 60 ist mit dem Kommunikationsmodul 50 verbunden. Die Messeinrichtung 10 kann daher auch aus der Ferne von der entfernt liegenden Überwachungsstation aus über Mobilfunk-Datenübertragung konfiguriert werden.

Bei der Konfiguration können verschiedene Parameter der Messeinrichtung festgelegt werden. Insbesondere gehört zur Konfiguration die Auswahl der Messmethode, die Festlegung der Alarmschwelle und die Festlegung der Alarmverzögerung.

Weiterhin hat die Messeinrichtung 10 einen Mikroprozessor 11, der alle Funktionen steuert und in dem ein Computerprogramm mit Programmcode zur Durchführung des Messverfahrens läuft.

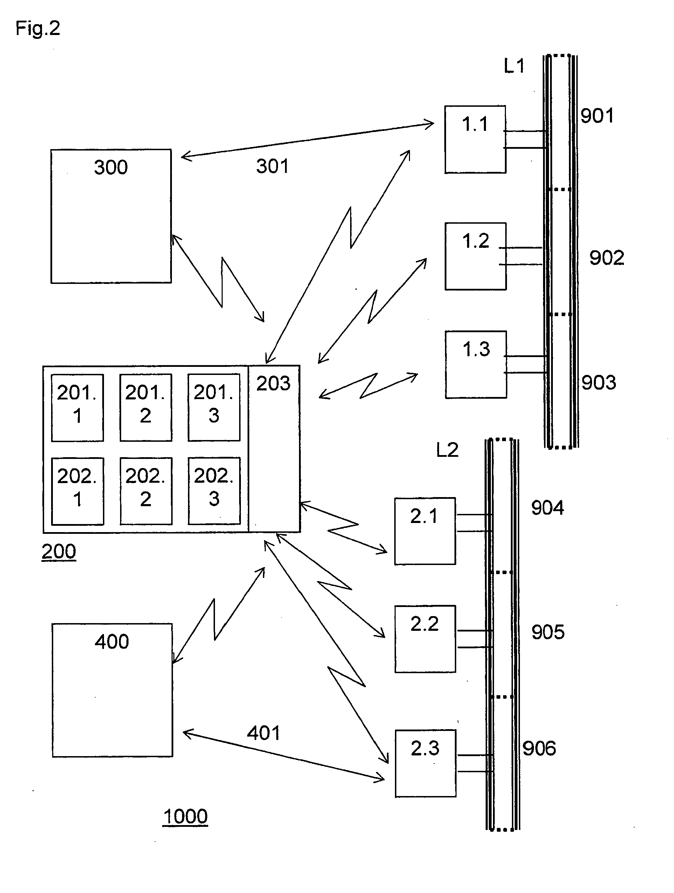

Es werde nun die Figur 2 betrachtet. Diese zeigt ein schematisches Blockschaltbild eines erfindungsgemäßen Systems zur Detektion und Ortung von Undichtigkeiten. Im gezeigten Beispiel werden zwei Fernwärmeleitungen L1 und L2 überwacht, wobei von jeder Leitung je drei Trassen 901, 902, 903; 904, 905, 906 dargestellt sind. Jeder Trasse ist eine erfindungsgemäße Messeinrichtung zugeordnet, der Trasse 901 die Einrichtung 1.1, der Trasse 902 die Einrichtung 1.2, der Trasse 903 die Einrichtung 1.3, der Trasse 904 die Einrichtung 2.1, der Trasse 905 die Einrichtung 2.2, der Trasse 906 die Einrichtung 2.3.

Die Leitung 1 gehört einem ersten Kunden. Von dessen erstem Kundenrechner 300 aus können die Messeinrichtungen 1.1, 1.2, 1.3 fernkonfiguriert und fernüberwacht werden, wobei eine Mobilfunkverbindung 301 benutzt wird.

Die Leitung 2 gehört einem zweiten Kunden. Von dessen zweiten Kundenrechner 400 aus können die Messeinrichtungen 2.1, 2.2, 2.3 fernkonfiguriert und fernüberwacht werden, wobei eine Mobilfunkverbindung 401 benutzt wird.

Alle Messeinrichtungen 1.1, 1.2, 1.3, 1.4, 1.5, 1.6 sind über Mobilfunkverbindungen darüber hinaus mit einem zentralen Server 200 verbunden. Auf dem Server 200 sind Daten- und Bedienbereiche 201.1, 201.2, 201.3, 202.1, 202.2, 202.3 vorgesehen, die jeweils einer der Messeinrichtungen 1.1, 1.2, 1.3, 2.1, 2.2, 2.3 zugeordnet sind. Der Server 200 ist ein Computer, auf dem ein Computerprogramm mit Programmcode zur Durchführung der Verfahrensschritte des Leckdetektions- und Ortungsverfahrens ausgeführt wird.

Der Server 200 wirkt als entfernt gelegene Überwachungsstation für die Messeinrichtungen 1.1, 1.2, 1.3, 2.1, 2.2, 2.3. Das Computerprogramm des Servers 200 enthält Zugriffsrechte für die einzelnen Daten- und Bedienbereiche. So ist festgelegt, dass der erste Kunde nur Zugriff auf die Daten- und Bedienbereiche 201.1, 201.2, 201.3 der Messeinrichtungen 1.1, 1.2, 1.3 hat, und der zweite Kunde entsprechend auf die Daten- und Bedienbereiche 202.1, 202.2, 202.3 der Messeinrichtungen 2.1, 2.2, 2.3.

Jeder Kunde konfiguriert und bedient die ihm zugehörigen Messeinrichtungen über den Server 200. Wenn der erste Kunde den Status seiner Rohrleitung anschauen möchte, so wählt er sich von seinem ersten Kundenrechner 300 aus in den Server 200 ein, dort erhält er Zugriff zu den ihm zugeordneten Daten- und Bedienbereichen der einzelnen Messeinrichtungen, und dort kann er den aktuellen Status jeder Trasse ablesen. Er kann auch entsprechend Messeinrichtungen über den Server 200 umkonfigurieren.

Wenn eine der Messeinrichtungen einen Schaden erkennt und den Schaden zusammen mit dem Schadensort meldet, so erfolgt die Meldung zu dem Server 200 in den der betreffenden Messeinrichtung zugeordneten Daten- und Bedienbereich. Das Computerprogramm des Servers ist dazu eingerichtet, dass der Server dann den Kundenrechner anwählt und die Fehlermeldung zusammen mit den Zustandsdaten an den Kundenrechner weitermeldet.

Selbstverständlich soll die Erfindung nicht auf die hier gezeigten Ausführungsbeispiele beschränkt sein. So können selbstverständlich mehr als zwei Fernwärmeleitungen mit jeweils mehr als 3 Trassen überwacht werden. Anstelle von Fernwärmeleitungen können auch Leitungen für Kältemedien oder Pipelines, die andere flüssige Produkte führen, überwacht werden. Neben Rohrleitungen kann auch ein Tank, beispielsweise ein Erdtank, eine Zisterne oder ähnliches, an verschiedenen Stellen auf Leckage überwacht werden.

### Bezugszeichenliste

- 1.1: Gerät 1 an Leitung 1
- 1.2: Gerät 2 an Leitung 1
- 1.3: Gerät 3 an Leitung 1
- 2.1: Gerät 1 an Leitung 2
- 2.2: Gerät 2 an Leitung 2
- 2.3: Gerät 3 an Leitung 2
- 10: Messeinrichtung
- 20: Messmodul
- 30: Messmodul
- 40: Messmodul
- 50: Kommunikationsmodul
- 60: Konfigurationsmodul
- 70: Verarbeitungs- und Anzeigemodul
- 80: Anschlussmodul
- 90: Fernwärmeleitungstrasse
- 91: inneres Rohr
- 92: äußeres Rohr
- 93: Füllmaterial
- 101: Sensorader
- 102: Sensorader
- 103: Abschlussdiode
- 104: feuchteempfindlicher Schalter
- 105: feuchteempfindlicher Schalter
- 106: feuchteempfindlicher Schalter
- 110: Kommunikationsverbindung
- 200: Server
- 201.1: Daten- u. Bedienbereich v. Gerät 1.1
- 201.2: Daten- u. Bedienbereich v. Gerät 1.2
- 201.3: Daten- u. Bedienbereich v. Gerät 1.3
- 202.1: Daten- u. Bedienbereich v. Gerät 2.1
- 202.2: Daten- u. Bedienbereich v. Gerät 2.2
- 202.3: Daten- u. Bedienbereich v. Gerät 2.3
- 203: Server-Kommunikationsmodul
- 300: Kundenrechner 1
- 301: direkte Kommunikationsleitung
- 400: Kundenrechner 2
- 401: direkte Kommunikationsleitung
- 901: Trasse 1 von Leitung 1
- 902: Trasse 2 von Leitung 1
- 903: Trasse 3 von Leitung 1
- 904: Trasse 1 von Leitung 2
- 905: Trasse 2 von Leitung 2
- 906: Trasse 3 von Leitung 2
- 1000: System zur Leitungsüberwachung
- L1: Fernwärmeleitung 1
- L2: Fernwärmeleitung 2

## Patentansprüche

1. Vorrichtung zur Detektion und Ortung von Undichtigkeiten bei Aufbewahrungs- oder Leitungsvorrichtungen für Fluide (90), die eine innere, das Fluid zurückhaltende oder leitende Einrichtung (91) und eine äußere, die innere Einrichtung wenigstens teilweise umfassende Einrichtung (92) aufweist, wobei beide Einrichtungen einen mit Füllmaterial (93) zur Wärmedämmung gefüllten Zwischenraum umschließen, und wobei die Vorrichtung in das Füllmaterial (93) eingebrachte Sensorleitungen umfasst, mit einer Messvorrichtung (10), welche umfasst
- eine Anschlussvorrichtung (80) zum Anschluss der Sensorleitungen (101, 102),
- wenigstens zwei Messmodule (20, 30, 40), wobei jedes der Messmodule (20, 30, 40) für die Ortung und Detektion von Undichtigkeiten nach einem anderen Messverfahren eingerichtet ist,
wobei die Messvorrichtung (10) **gekennzeichnet ist durch**
- ein Konfigurationsmodul (60), welches zur Auswahl und Konfiguration der Messmodule (20, 30, 40) eingerichtet ist,
- ein Kommunikationsmodul (50), welches für die drahtlose Kommunikation der Messeinrichtung (10) mit einer entfernt liegenden Überwachungseinrichtung eingerichtet ist,
so dass die Auswahl des jeweils zu verwendenden Messverfahrens und die Konfiguration des zugehörigen Messmoduls (20, 30, 40) von der entfernt liegenden Überwachungsstation (200) aus, mittels drahtloser Kommunikation (110) erfolgen kann.

2. Vorrichtung nach Anspruch 1, wobei ein erstes Messmodul (20) für die Ortung und Detektion von Undichtigkeiten nach dem Verfahren der Widerstandsortung eingerichtet ist.

3. Vorrichtung nach Anspruch 2, wobei ein zweites Messmodul (30) für die Ortung und Detektion von Undichtigkeiten nach dem Verfahren der Laufzeitortung eingerichtet ist.

4. Vorrichtung nach Anspruch 3, wobei ein drittes Messmodul (40) für die für die Ortung und Detektion einer Leitungsunterbrechung der Sensoradern (101, 102) nach dem Kapazitätsmessverfahren eingerichtet ist.

5. Vorrichtung nach einem der vorigen Ansprüche, wobei das Kommunikationsmodul (50) für die drahtlose Kommunikation (110) nach einem Mobilfunk-Standard eingerichtet ist.

6. Vorrichtung nach einem der vorigen Ansprüche, wobei die Messmodule (20, 30, 40) dazu eingerichtet sind, um bei Detektion einer Undichtigkeit oder eines Sensoraderbruches erst nach Ablauf einer vorgebbaren Alarmverzögerungszeit eine Alarmmeldung über das Anzeige- und Verarbeitungsmodul (70) und/oder das Kommunikationsmodul (50) an die Überwachungsstation (200) zu senden.

7. System zur Detektion und Ortung von Undichtigkeiten bei Aufbewahrungs- oder Leitungsvorrichtungen (90) für Fluide, die eine innere, das Fluid zurückhaltende oder leitende Einrichtung (91) und eine äußere, die innere Einrichtung wenigstens teilweise umfassende Einrichtung (92) aufweist, wobei beide Einrichtungen einen mit Füllmaterial (93) zur Wärmedämmung gefüllten Zwischenraum umschließen, und wobei die Vorrichtung in das Füllmaterial (93) eingebrachte Sensorleitungen (101, 102) umfasst, **gekennzeichnet durch**
- wenigstens eine zu überwachende Aufbewahrungs- oder Leitungsvorrichtung für Fluide (90),
- wenigstens eine Vorrichtung nach einem der Ansprüche 1 bis 7,
- einen Server-Computer mit einem Server-Kommunikationsmodul (203), der als entfernt liegende Überwachungseinrichtung (200) für die wenigstens eine Vorrichtung eingerichtet ist.

8. System nach Anspruch 7, wobei jeder zu überwachende Abschnitt der Aufbewahrungs- oder Leitungsvorrichtung (90) über eine diesem Abschnitt zugeordnete Vorrichtung nach einem der Ansprüche 1 bis 7 verfügt, und wobei der Server (200) für jede der Vorrichtungen einen dieser Vorrichtung zugeordneten Daten- und Bedienbereich (201.1, 201.2, 201.3, 202.1, 202.2, 202.3) umfasst.

9. System nach Anspruch 8, wobei der jeder Vorrichtung zugeordnete Daten- und Bedienbereich (201.1, 201.2, 201.3, 202.1, 202.2, 202.3) auf dem Server-Computer (200) dazu eingerichtet ist, um Daten über den aktuellen Zustand des überwachten Abschnittes anzuzeigen, zu speichern und für eine Fernabfrage von einem entfernt liegenden Kundencomputer, aus zur Verfügung zu stellen.

10. System nach Anspruch 9, wobei von einem entfernt liegenden Kunden-Computer (300, 400) aus Daten von denjenigen Daten- und Bedienbereichen auf dem Server-Computer (200), die dem Kunden zugeordnet sind, abfragbar sind und Daten und/oder Anweisungen von einem entfernt liegenden Kunden-Computer (300, 400) aus in diejenigen Daten- und Bedienbereichen auf dem Server-Computer (200), die dem Kunden zugeordnet sind, übertragbar sind.

11. System nach einem der Ansprüche 7 bis 10, wobei die Vorrichtungen zur drahtlosen Kommunikation (110) mit dem Kunden-Computer (300, 400) eingerichtet sind, um Daten von den Vorrichtungen abzufragen und/oder Daten und/oder Anweisungen zu den Vorrichtungen zu übertragen.

12. Verfahren zur Detektion und Ortung von Undichtigkeiten bei Aufbewahrungs- oder Leitungsvorrichtungen (90) für Fluide, die eine innere, das Fluid zurückhaltende oder leitende Einrichtung (91) und eine äußere, die innere Einrichtung wenigstens teilweise umfassende Einrichtung (92) aufweist, wobei beide Einrichtungen (91, 92) einen mit Füllmaterial (93) zur Wärmedämmung gefüllten Zwischenraum umschließen, und wobei die Vorrichtung in das Füllmaterial (93) eingebrachte Sensorleitungen (101, 102) umfasst, mit einem System gemäß einem der Ansprüche 7 bis 11, **gekennzeichnet durch** die Verfahrensschritte
- Auswahl und Konfiguration eines Messmoduls (20, 30, 40) und damit eines durch das ausgewählte Messmodul (20, 30, 40) durchzuführenden Messverfahrens,
- Feststellen, ob **durch** das ausgewählte Messmodul (20, 30, 40) aufgrund des ausgewählten Messverfahrens ein Indikatorwert für eine Undichtigkeit oder einen Bruch der Sensoradern (101, 102) ermittelt wurde,
- Anzeigen einer Fehlermeldung und Anzeigen des von dem Messmodul (20, 30, 40) ermittelten Fehlerortes, wenn ein entsprechender Indikatorwert festgestellt wurde,
- Übertragen der Fehlermeldung und des Fehlerortes an den Server-Computer (200).

13. Verfahren nach Anspruch 12, wobei die Auswahl und Konfiguration eines Messmoduls (20, 30, 40) von dem Server-Computer (200) aus erfolgt und bei der Konfiguration ein Wert für eine Alarmverzögerung von dem Server-Computer an die Mess-Vorrichtung (10) übertragen wird.

14. Verfahren nach Anspruch 12 oder 13, wobei bei Erkennen eines Indikatorwertes für eine Undichtigkeit oder einen Bruch der Sensoradern (101, 102) eine redundante Messung mit einem anderen Messmodul (20, 30, 40) der Messvorrichtung (10) zur Überprüfung der ersten Messung durchgeführt wird.

15. Computerprogramm mit Programmcode zur Durchführung der Verfahrensschritte nach Anspruch 12, wenn das Programm in einem Computer ausgeführt wird.

16. Rohrleitungssystem mit wenigstens einer Rohrleitung (90), die ein Innenrohr (91), ein Außenrohr (92) und Füllmaterial (93) zur Wärmedämmung im Raum zwischen dem Innenrohr (91) und dem Außenrohr (92) sowie Sensorleitungen (101, 102) im Füllmaterial (93) aufweist, und mit einem System zur Detektion und Ortung von Undichtigkeiten gemäß einem der Ansprüche 7 bis 11.

## Claims

1. Device for detecting and locating leaks in storage or duct devices for fluids (90), having an inner means (91) retaining or conducting the fluid and an outer means (92) surrounding the inner means at least partially, wherein both means enclose an interspace filled with filler material (93) for thermal insulation, and wherein the device includes sensor cables introduced in the filler material (93), with a measuring device (10) comprising
- a connecting device (80) for connecting the sensor cables (101, 102),
- at least two measuring modules (20, 30, 40), wherein each of the measuring modules (20, 30, 40) is set up for locating and the detecting leaks according to a different measurement method,
wherein the measuring device (10) is **characterized by**
- a configuration module (60) which is adapted for the selection and configuration of the measuring modules (20, 30, 40),
- a communication module (50), which is adapted for wireless communication of the measuring device (10) with a remote monitoring device,
so that the selection of each measurement method to be used and the configuration of the corresponding measuring modules (20, 30, 40) can be effected by means of wireless communication (110) from the remote monitoring station (200).

2. Device according to claim 1, wherein a first measuring module (20) is adapted for locating and detecting leaks in accordance with the method of resistance localization.

3. Device according to claim 2, wherein a second measuring module (30) is adapted for locating and detecting leaks in accordance with the method of transfer time localization.

4. Device according to claim 3, wherein a third measuring module (40) is adapted for locating and detecting a line break in the sensor wires (101, 102) in accordance with the method of capacitance measurement.

5. Device according to one of the preceding claims, wherein the communication module (50) for wireless communication (110) is adapted according to a cellular radio standard.

6. Device according to one of the preceding claims, wherein the measuring modules (20, 30, 40) are adapted to send an alarm message via the display and processing module (70) and/or the communication module (50) to the monitoring station (200) upon detection of a leak or a sensor wire breakage only after the expiry of a predetermined alarm delay time.

7. System for detecting and locating leaks in storage or duct devices (90) for fluids having an inner means (91) for retaining or conducting the fluid and an outer means (92) surrounding the inner means at least partially, wherein both means enclose an interspace filled with filler material (93) for thermal insulation, and wherein the device includes sensor cables (101, 102) introduced in the filling material (93), **characterized by**
- at least one storage or duct device for fluids (90) which is to be monitored
- at least one device according to one of claims 1 to 7,
- a server computer having a server communication module (203) which is adapted as a remote monitoring device (200) for the at least one device.

8. System aqccoding to claim 7 wherein each section of the storage or duct device which is to be monitored has a device according to one of claims 1 to 7 assigned to this section, and wherein the server (200) comprises a data and operating area (201.1, 201.2, 201.3, 202.1, 202.2, 202.3) for each of the devices assigned to this device.

9. System according to claim 8, wherein the data and operating area (201.1, 201.2, 201.3, 202.1, 202.2, 202.3) on the server computer (200) assigned to each device is configured to display, to save and to provide information about the current state of the monitored section, for a remote access from a remote client computer.

10. System according to claim 9, wherein data from those data and operating areas on the server computer (200) which are assigned to the customer can be retrieved from a remote client computer (300, 400) and/or instructions can be transmitted from a remote client computer (300, 400) onto the server computer (300, 400) into those data and operating areas that are assigned to the customer.

11. System according to one of claims 7 to 10, wherein the means for wireless communication (110) with the client computer (300, 400) are adapted to retrieve data from the devices and/or to transmit instructions to the devices.

12. Method for detecting and locating leaks in storage or duct devices (90) for fluids having an inner means (91) for retaining or conducting the fluid and an outer means (92) surrounding the inner means at least partially, wherein both means (91, 92) enclose an interspace filled with filler material (93) for thermal insulation, and wherein the device includes sensor cables (101, 102) introduced in the filling material (93), with a system according to one of claims 7 to 11, **characterized by** the method steps
- selecting and configuring a measuring module (20, 30, 40) and thus a measurement procedure to be performed by the selected measuring module (20, 30, 40),
- determining whether the selected measuring module (20, 30, 40) has determined an indicator value for a leak or a breakage of the sensor wires (101, 102) based on the selected measurement method,
- displaying an error message and displaying the fault location determined by the measuring module (20, 30, 40) if a pertinent indicator value was detected,
- transmitting the error message and the fault location to the server computer (200).

13. Method according to claim 12, wherein the selection and configuration of a measuring module (20, 30, 40) is carried out by the server computer (200) and in the configuration, a delay value of an alarm is transmitted from the server computer to the measuring device (10).

14. Method according to claim 12 or 13, wherein upon detection of an indicator value for a leakage or a breakage of the sensor wires (101, 102), a redundant sensor measurement is carried out with a different measuring module (20, 30, 40) of the measuring device (10) for checking the first measurement.

15. Computer program with program code for performing the method steps of claim 12 when said program is run on a computer.

16. Pipe system with at least one duct (90), having an inner tube (91), an outer tube (92) and filler material (93) for thermal insulation in the space between the inner tube (91) and the outer tube (92) as well as sensor cables (101, 102) in the filler material (93), and with a system for detection and location of leakage according to any one of claims 7 to 11.

## Revendications

1. Dispositif de détection et de localisation d'inétanchéités dans des dispositifs de stockage et de guidage de fluides (90), qui présente un appareil intérieur (91) retenant ou guidant le fluide et un appareil extérieur (92) comprenant au moins partiellement l'appareil intérieur, les deux appareils renfermant un compartiment intermédiaire rempli d'un matériau de remplissage (93) pour une isolation thermique, et le dispositif comprenant des câbles de capteur introduits dans le matériau de remplissage (93), avec un dispositif de mesure (10), qui comprend
- un dispositif de raccordement (80) destiné au raccordement des câbles de capteur (101, 102),
- au moins deux modules de mesure (20, 30, 40), chacun des modules de mesure (20, 30, 40) étant approprié pour la localisation et la détection d'inétanchéités selon un autre procédé de mesure,
dans lequel le dispositif de mesure (10) est **caractérisé par**
- un module de configuration (60), qui est approprié pour une sélection et une configuration des modules de mesure (20, 30, 40),
- un module de communication (50), qui est approprié pour la communication sans fil de l'appareil de mesure (10) avec un appareil de surveillance situé à distance,
de sorte que la sélection du procédé de mesure à utiliser respectivement et la configuration du module de mesure (20, 30, 40) associé peut avoir lieu depuis la station de surveillance (200) située à distance, au moyen de la communication sans fil (110).

2. Dispositif selon la revendication 1, dans lequel un premier module de mesure (20) est approprié pour la localisation et la détection d'inétanchéités selon le procédé de la localisation par résistance.

3. Dispositif selon la revendication 2, dans lequel un deuxième module de mesure (30) est approprié pour la localisation et la détection d'inétanchéités selon le procédé de la localisation grâce au temps de propagation.

4. Dispositif selon la revendication 3, dans lequel un troisième module de mesure (40) est approprié pour la localisation et la détection d'une coupure de ligne des conducteurs de capteur (101, 102) selon le procédé de la mesure de capacité.

5. Dispositif selon l'une quelconque des revendications précédentes, dans lequel le module de communication (50) est approprié pour la communication sans fil (110) selon une norme de radiocommunication mobile.

6. Dispositif selon l'une quelconque des revendications précédentes, dans lequel les modules de mesure (20, 30, 40) sont appropriés pour n'envoyer un message d'alerte à la station de surveillance (200) par l'intermédiaire du module d'affichage et de traitement (70) et/ou du module de communication (50) qu'après expiration d'un temps de temporisation d'alerte pouvant être prédéfini en cas de détection d'une inétanchéité ou d'une interruption d'un conducteur de capteur.

7. Système de détection et de localisation d'inétanchéités dans des dispositifs de stockage ou de guidage (90) destinés à des fluides, qui présentent un appareil intérieur (91) retenant ou guidant le fluide et un appareil extérieur (92) comprenant au moins partiellement l'appareil intérieur, les deux appareils renfermant un compartiment intermédiaire rempli de matériau de remplissage (93) pour une isolation thermique, et dans lequel le dispositif comprend des câbles de capteur (101, 102) introduits dans le matériau de remplissage (93), **caractérisé par**
- au moins un dispositif de stockage ou de guidage pour fluides (90) à surveiller,
- au moins un dispositif selon l'une quelconque des revendications 1 à 7,
- un ordinateur serveur avec un module de communication de serveur (203), qui est approprié en tant qu'appareil de surveillance (200) situé à distance pour ledit au moins un dispositif.

8. Système selon la revendication 7, dans lequel chaque section à surveiller du dispositif de stockage ou de guidage (90) dispose d'un dispositif associé à ladite section selon l'une quelconque des revendications 1 à 7, et dans lequel le serveur (200) comprend pour chacun des dispositifs un secteur de données et de commande (201.1, 201.2, 201.3, 202.1, 202.2, 202.3) associé audit dispositif.

9. Système selon la revendication 8, dans lequel le secteur de données et de commande (201.1, 201.2, 201.3, 202.1, 202.2, 202.3) associé à un dispositif respectif sur l'ordinateur serveur (200) est approprié pour afficher des données sur l'état en cours de la section surveillée, pour les mémoriser et pour les mettre à disposition pour une requête d'un ordinateur client situé à distance.

10. Système selon la revendication 9, dans lequel des données des secteurs de données et de commande présents sur l'ordinateur serveur (200) qui sont associés au client peuvent être demandées par un ordinateur client (300, 400) situé à distance, et des données et/ou des indications peuvent être transférées, depuis un ordinateur client (300, 400) situé à distance, vers l'ordinateur serveur (200) dans les secteurs de données et de commande qui sont associés au client.

11. Système selon l'une quelconque des revendications 7 à 10, dans lequel les dispositifs sont appropriés pour une communication sans fil (110) avec l'ordinateur client (300, 400), afin de demander des données auprès des dispositifs et/ou pour transférer des données et/ou des indications vers les dispositifs.

12. Procédé de détection et de localisation d'inétanchéités dans des dispositifs de stockage ou de guidage (90) pour des fluides, qui présentent un appareil intérieur (91) retenant ou guidant le fluide et un appareil extérieur (92) comprenant au moins partiellement l'appareil intérieur, les deux appareils (91, 92) renfermant un compartiment intermédiaire rempli d'un matériau de remplissage (93) pour une isolation thermique, et dans lequel le dispositif comprend des câbles de capteur (101, 102) introduits dans le matériau de remplissage (93), avec un système selon l'une quelconque des revendications 7 à 11, **caractérisé par** les étapes suivantes consistant à
- sélectionner et configurer un module de mesure (20, 30, 40) et donc un procédé de mesure à mettre en oeuvre par le module de mesure (20, 30, 40) sélectionné,
- constater si une valeur d'indicateur pour une inétanchéité ou une interruption des conducteurs de capteur (101, 102) a été déterminée par le module de mesure (20, 30, 40) sélectionné sur la base du procédé de mesure sélectionné,
- afficher un message d'erreur et afficher l'emplacement d'erreur déterminé par le module de mesure (20, 30, 40), lorsqu'une valeur d'indicateur correspondante a été constatée,
- transférer le message d'erreur et l'emplacement d'erreur vers l'ordinateur serveur (200).

13. Procédé selon la revendication 12, dans lequel la sélection et la configuration d'un module de mesure (20, 30, 40) sont réalisés par l'ordinateur serveur (200) et une valeur de temporisation d'alerte est transférée de l'ordinateur serveur vers le dispositif de mesure (10) lors de la configuration.

14. Procédé selon la revendication 12 ou 13, dans lequel une mesure redondante avec un autre module de mesure (20, 30, 40) du dispositif de mesure (10) est mise en oeuvre lors de l'identification d'une valeur d'indicateur pour une inétanchéité ou une interruption des conducteurs de capteur (101, 102) afin de vérifier la première mesure.

15. Programme informatique avec un code de programme destiné à mettre en oeuvre les étapes de procédé selon la revendication 12 lorsque le programme est exécuté dans un ordinateur.

16. Système de conduite avec au moins une conduite (90), qui présente une conduite intérieure (91), une conduite extérieure (92) et du matériau de remplissage (93) pour une isolation thermique dans un espace situé entre la conduite intérieure (91) et la conduite extérieure (92) ainsi que des câbles de capteur (101, 102) se trouvant dans le matériau de remplissage (93), et avec un système de détection et de localisation d'inétanchéités selon l'une quelconque des revendications 7 à 11.
